# EUROPEAN PATENT APPLICATION

(11) **EP 4 775 625 A1**
(43) Date of publication of application: **15.07.2026**
(21) Application number: 25151204.2
(22) Date of filing: 10.01.2025
(51) Int. Cl.: C08J 11/10, C08J 11/12, C08L 23/04

(54) **PROCESS FOR OBTAINING RECYCLED POLYETHYLENE**

(71) Applicant: Basell Polyolefine GmbH, 50389 Wesseling (DE)
(72) Inventor: MAUS, Andreas, 65926 Frankfurt/M. (DE); MANNEBACH, Gerd, 65926 Frankfurt/M. (DE); SCHNEIDER, Patrik, 65926 Frankfurt/M. (DE)
(74) Representative: LyondellBasell

(57) **Abstract**

A process for obtaining a recycled polyethylene material having a MIE (ISO 1133-1 2012-03 at 190°C and 5 kg) ranging from 1.0 to 15.0 g/10 min, said process comprises the following steps:
T1) dry blending a composition comprising:
A) from 90 to 10 wt% of a recycled crosslinked;
B) from 90 to 10 wt% of a high density polyethylene polymer;

T2) subjecting the dry blended composition of step T1 to thermal visbreaking at a temperature higher than 290°C in an extruder device

## Description

### FIELD OF THE INVENTION

The present disclosure discloses a method to make polyethylene material, derived mainly from recycled crosslinked high density polyethylene pipes.

### BACKGROUND OF THE INVENTION

Recycling, especially of crosslinked recycled polyethylene (PEX) pipes, has become a critical endeavor in our quest for sustainable material management. Crosslinked polyethylene is extensively used in various applications due to its superior properties such as high temperature resistance, durability, and flexibility. However, these very characteristics that make PEX invaluable in its applications also pose significant challenges when it comes to recycling. Traditional recycling methods find it difficult to process crosslinked materials, which don't melt and flow as thermoplastics do. Therefore, developing effective recycling methodologies for PEX not only helps in reducing the environmental footprint by diverting waste from landfills but also conserves valuable resources, reduces the need for virgin plastic production, and promotes a circular economy. The ability to recycle PEX pipes mechanically would thus represent a significant advancement in our recycling capabilities, ensuring that these durable and versatile materials can be sustainably managed throughout their lifecycle.

Crosslinked HDPE is characterized by a network of chemical bonds that link polymer chains together, forming a three-dimensional matrix. Unlike thermoplastics, which melt and flow when heated, crosslinked HOPE does not melt. This absence of melt flow makes it impossible to process using standard recycling techniques such as extrusion and injection molding, which rely on the material becoming fluid

It has now been found that recycled crosslinked polyethylene can be converted in recycled polyethylene material by thermally visbreaking the recycled crosslinked polyethylene, without using peroxides and without having to operate at high pressure.

### SUMMARY OF THE INVENTION

The present disclosure provides a process for obtaining a recycled polyethylene material having a MIE (ISO 1133-1 2012-03 at 190°C and 5 kg) ranging from 1.0 to 15.0 g/10 min, preferably ranging from 3.0 to 12.0 g/10 min more preferably ranging from 4.5.0 to 8.2 g/10 min; said process comprises the following steps:
T1) dry blending a composition comprising:
   A) from 90 to 10 wt% preferably from 30 to 70 wt% ; more preferably from 40 wt% to 60 wt% of a recycled crosslinked polyethylene having the MIE (ISO 1133-1 2012-03 at 190°C and 5 kg) not measurable and having no melting point;
   B) from 90 to 10 wt% preferably from 30 to 70 wt% ; more preferably from 40 wt% to 60 wt% of a high density polyethylene polymer having:
      i) MIE (ISO 1133-1 2012-03 at 190°C and 5 kg) ranging from 0.1 to 6.2 g/10 min, preferably ranging from 0.4 g/10 min, to 4.2 g/10 min, more preferably ranging from 0.7 to 3.2 g/10 min;
      ii) density (ISO 1183-1:2012 at 23°C) ranging from 0.940 to 0.965 g/cm³; preferably ranging from 0.943 to 0.962 g/cm³; more preferably ranging from 0.948 to 0.961 g/cm³;
T2) subjecting the dry blended composition of step T1 to thermal visbreaking at a temperature higher than 290°C in an extruder device.

The recycled polyethylene material so obtained has valuable mechanical and optical properties, and can be used for obtaining injection molding articles, blow molding articles and extruded articles such as pipes or also it can be used for obtaining film, in particular cast or BOPP film.

### DETAILED DESCRIPTION OF THE INVENTION

The expression "polyethylene" is used herein to embrace, as alternatives, both a single ethylene polymer and a polyethylene composition, i.e. a composition comprising two or more ethylene polymers.

Component A) cannot be extruded in a pure form, not even at elevated temperatures like in thermal visbreaking (>290°C). Component A) in order to be extruded has to be blended with component B).

The resulting mixture is then thermally visbroken in a twin screw extruder at elevated temperatures (>290°C) to break-up the polymer network. By fine Tuning component B with the thermal visbreaking it is possible to tune the features such as density and MFR of the resulting recycled polyethylene material.

The resulting recycled polyethylene material can be used as such or compounded in additional steps with a polyethylene polymer to achieve the whished final material having the selected features.

Component B) used in the present process can consist of or comprise virgin polyethylene or can consist of or comprise recyclate polyethylene.

Component B) can also consist of or comprise a blend of virgin polyethylene and recyclate polyethylene.

For example component B is a commercially avaiblabe grade, and can be blended in a ratio of 60 / 40 of vb PE / v PE, or 50 / 50 vb PE / v PE (according to Table 1).

The expression "virgin polyethylene" means that it has not been subjected to any process for production of finished articles, for instance packaging films, pipes, bottles, containers, or semi-finished articles, like fibers or sheets for thermoforming.

Thus the virgin polyethylene has not been subjected to post-processing, except for possible pelletization, which is still considered part of the polymer production process.

The expression "recyclate polyethylene" as used herein, means post-consumer recycled ("PCR") polyethylene and/or post-industrial recycled ("PIR") polyethylene. PCR polyethylene is derived from an end product that has completed its life cycle as a consumer item and would otherwise be disposed of as waste (e.g., a polyethylene water bottle). PIR polyethylene is derived from plastic scrap that is generated as waste from an industrial process. PCR polyolefins include polyolefins that have been collected in commercial and residential recycling programs, including flexible packaging (cast film, blown film and BOPP film), rigid packaging, blow molded bottles, and injection molded containers.

Hence, in general terms, the recyclate polyethylene is a material deriving from an article manufacturing process.

Usually, through a step of separation from other polymers, such as PVC, PET or PS, two main polyolefinic fractions are obtained, namely the recyclate polyethylene (including HDPE, MDPE, LDPE, and LLDPE) and recyclate polypropylene (including homopolymers, random copolymers, and heterophasic copolymers).

However the recyclate polyethylene can still comprise significant amounts, even high amounts of other polymers, like those specified above, including also polypropylene.

Other polymers and in general other materials, like for instance fillers, can also be present. Preferably the polyethylene component A) comprises at least 70% by weight of ethylene polymers, more preferably at least 80% by weight of ethylene polymers, most preferably at least 90% by weight of ethylene polymers, the preferred upper limit being of 100% by weight of ethylene polymers in all cases. Said amounts are referred to the total weight of the unprocessed component A).

Preferably in component A) the FTIR spectrum of film recorded as described in the example section shows at least two peaks at different wavenumbers (cm-1) selected from:
3303 ±1 cm-1; 1642 ±1 cm-1; 1550 ±1 cm-1; 1491±1 cm-1; 1451±1 cm-1; 1726 ±1 cm-1; 1600 ±11 cm-1, 748 ±1 cm-1; 695 ±1 cm-1.

Component A) is a crosslinked polyethylene, so called PEX. It can be obtained with different processes, like crosslinking with peroxides (PE-XA), silanes (PE-XB), electron beam (PE-XC) or via reaction with Azo-chemicals (PE-XD).

Before to be crosslinked component A) can consist of LDPE, or particular from HDPE (High Density Polyethylene, typically having a density from 0.940 to 0.965 g/cm³), MDPE (Medium Density Polyethylene, typically having a density from 0.926 to 0.940 g/cm³), LLDPE (Linear Low Density Polyethylene, typically having a density 0.900 to 0.939 g/cm³) and mixtures thereof.

They are ethylene homopolymers and ethylene copolymers containing α-olefin monomer units (preferably in amounts up to 10% by weight) and their mixtures. Examples of the said α-olefins monomer units are those having from 3 to 8 carbon atoms, in particular propylene, 1-butene, 1-pentene, 1-hexene, 1-octene and 4-methyl-1-pentene. 1-butene and 1-hexene are preferred.

Said homopolymers and copolymers can be obtained by way of polymerization processes in the presence of coordination catalysts. Said processes and the homopolymers and copolymers obtained from them are widely described in the art.

In particular it is possible to carry out the polymerization process in the presence of a Ziegler-Natta catalyst or single site catalyst.

As is well known, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCl₂. Particularly preferred catalysts comprise the product of the reaction of said organometallic compound of group 1, 2 or 13 of the Periodic Table of elements, with a solid catalyst component comprising a Ti compound supported on MgCl₂.

Preferred organometallic compounds are the organo-Al compounds.

The single site catalysts are known in the art and are generally selected from metallocene and non-metallocene single site catalysts.

Examples of metallocene single site catalysts are zirconocenes and hafnocenes, for instance cyclopentadienyl or indenyl complexes of zirconium or hafnium, like bis (cyclopentadienyl) zirconium dichloride; bis (indenyl) zirconium dichloride or bis (indenyl) hafnium dichloride.

Examples of non-metallocene single site catalysts are iron complex compounds preferably having a tridentate ligand.

An example of high density recyclate polyethylene having the characteristics quoted above is suitable.

Thermal visbreaking includes a treatment of a composition comprising component A) and component B) as above reported at temperature and/or mechanical shear energy sufficient to cause polymer chain scission to predominate of polymer chain branching or crosslinking.

The thermal visbreaking is carried out by heating the dry blended composition comprising component A) and component B) at a temperature equal to or greater than 290°C, preferably at a temperature equal to or greater than 300°C, more preferably at a temperature equal to or greater than 305°C, most preferably at a temperature equal to or greater than 310°C, the preferred upper limit being of 500°C in all cases.

In particular, the thermal visbreaking can be carried out at the following temperatures:
- from 290°C to 500°C; or
- from 300°C to 500°C; or
- from 310°C to 500°C; or
- from 280°C to 480°C; or
- from 290°C to 480°C; or
- from 300°C to 480°C; or
- from 310°C to 480°C; or
- from 280°C to 460°C; or
- from 290°C to 460°C; or
- from 300°C to 460°C; or
- from 310°C to 460°C.

Preferably the thermal visbreaking is carried out in the absence of or substantially in the absence of oxygen, wherein substantial absence of oxygen means less than or equal to 1.0% by weight, less than or equal to 0.10% by weight, or less than or equal to 0.01% by weight, based on the total weight of polymer in the thermal visbreaking zone.

It is known that thermal visbreaking can be run in the conventional mixing apparatuses generally used for processing polymers in the molten state.

In particular, the thermal visbreaking process of the present disclosure can be carried out processing the dry blended composition comprising component A) and component B) in an extruder device. Suitable extruder devices are extruders or continuous mixers. These extruders or mixers can be single- or two-stage machines which melt and homogenize the polyethylene. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating twin rotor or the extruder device comprises at least one co-rotating twin screw extruder. Machinery of this type is conventional in the plastics industry and is manufactured by, for example, Leistritz Extrusionstechnik GmbH, Nuremberg, Germany; Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

As known by the technical expert, the extent of visbreaking, thus the increase of melt flow index in the thermal visbreaking step, is mainly influenced by the temperature and by the specific energy input.

In an extruder device, the specific energy input (SEI) refers to the energy input that is mechanically applied to the melt through the rotation of the screws and which correlates to the power consumption of the motor. It can be expressed in kWh/kg. The higher the temperature and/or the SEI value, the higher will be the melt flow index value resulting from the thermal visbreaking step.

Indicatively, the SEI value may range from 0.15 to 0.4 kWh/kg, preferably from 0.20 to 0.35 kWh/kg.

In addition, one or more additives can be fed to the composition comprising component A) and component B). Feeding of these additives may occur before, during or after thermal visbreaking.

Such additives are common in the art. Suitable types of additives for preparing polyethylene compositions are, for example, antioxidants, melt stabilizers, light stabilizers, acid scavengers, lubricants, processing aids, antiblocking agents, slip agents, antistatic agents, antifogging agents, pigments or dyes, nucleating agents, flame retardants or fillers. It is common that several additives are added. The multiple additives can be different types of additives. It is however also possible that several representatives of one type of additives are added to the low densitiy polyethylene. Additives of all these types are generally commercially available andhere antioxidant addition is used in conjunction with thermal visbreaking, the antioxidant is added after a substantial portion of the visbreaking reaction has taken place.

### EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods were used to characterize the polymer compositions.

### Melt flow index

Determined according to ISO 1133-1 2012-03 at 190°C 5 kg

### Density

Determined according to ISO 1183-1:2012 at 23°C.

### Cast Film Measurement

The Film measurement of gels was carried out on an OCS extruder type ME 202008-V3 with 20 mm screw diameter and a screw length of 25 D with a slit die width of 150 mm. The cast line is equipped with a chill roll and winder (model OCS CR-9). The optical equipment consists of a OSC film surface analyzer camera, model FTA-100 (flash camera system) with a resolution of 26 µm x 26 µm. After purging the resin first for 1 hour to stabilize the extrusion conditions, inspection and value recording take place for 30 minutes afterwards. The resin is extruded at 220°C with a take-off speed of ca. 2.7 m/min to generate a film with thickness 50 µm. The chill roll temperature was 70°C. The said inspection with the surface analyzer camera provided the total content of gels and the content of gels with diameter of higher than 600 µm.

### Molecular Weight Distribution Determination

The determination of the means Mw and Mn and of Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500µl and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: k_{PS}= 0.000121 dl/g, α_{PS}=0.706 and for PE k_{PE}= 0.000406 dl/g, α_{PE}=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

### Comonomer content

The comonomer content was determined by means of IR in accordance with ASTM D 6248 98, using an FT-IR spectrometer Tensor 27 from Bruker.

### Melt strength

Melt strength of a polymer is an important parameter in melt processing operations where stretching or drawing is involved at one or more stages in the process. It depends on molecular parameters like e.g. molecular weight, molecular weight distribution and/or polymer branches. The test device measures the extensional properties of polymer melts by drawing a vertical melt strand under constant force in the Rheotens spinline, which is located underneath the capillary die, at either constant pull-off speed or with a linear accelerating velocity.

Melt Strength analysis was carried out at 190°C on a Göttfert Rheotester 1000 (12 mm Barrel diameter, Capillary die L/D = 20/2), equipped with a RHEOTENS 71.97 device. The RHEOTENS consists of two upper and two lower driven, counter rotating wheels that are connected to a very sensitive balance-system. The vertical gap between the wheels was 0.3 mm. After 10 min. melting time, the polymer was extruded with a shear rate of 50 1/s. The polymer strand leaves the capillary die and the die-exit velocity v₀ is recorded. At a strand length of 74 mm the upper two wheels pull the melt strand downwards with an acceleration of 2.4 mm/s² and the velocity v is recorded (the lower two wheels are only for additionally stabilizing the strand during drawdown). The drawdown ratio I = v/v₀ at break, the velocity at break, and the force at break of the melt strand (F(max) = Melt Strength) are recorded.

FTIR Spectrum: The IR spectrum was determined by infrared (IR) spectroscopy by recording the sample against a background level of air with a Fourier transform infrared (FTIR) spectrometer. The data acquisition parameters of the instrument were:
▪ purge time: 30 seconds minimum
▪ collection time: 3 minutes minimum
▪ apodization: Happ-Genzel
▪ resolution: 2 cm⁻¹.
Sample preparation using a hydraulic press, a thick sheet was obtained by compression molding approximately 1 g sample between two sheets of aluminum foil. A small portion of the resulting sheet was cut to form a film. The film thickness was set to have a maximum absorbance of the CH 2 absorption band at ~720 cm-1 of 1.3 au (% Transmittance > 5%). Molding conditions were performed at a temperature of approximately 180 ± 10°C (356°F) and a pressure of approximately 10 kg/cm2 (142.2 psi) for approximately one minute. After the pressure was released, the sample was removed from the press and cooled to room temperature. The spectrum of the pressed film was recorded as a function of absorbance versus wavenumbers (cm⁻¹).

### Example 1

### Component A)

Component A) is a recycled crosslinked polyethylene from pipe, crosslinked via electron beam (PE-XC), MFR not measurable, showing at least two peaks at different wavenumbers (cm-1) selected from:
3303 ±1 cm-1; 1642 ±1 cm-1; 1550 ±1 cm-1; 1491±1 cm-1; 1451±1 cm-1; 1726 ±1 cm-1; 1600 ±11 cm-1, 748 ±1 cm-1; 695 ±1 cm-1 in the FTIR spectrum.

### Component B)

Component B) is a commercial available high density polyethylene resin, having a melt flow rate (190°C, 5 kg) of 1.2 g/10 min and a density of 0.958 g/cm³.

Component A), has been shredded and then it has been dry blended with component B). The blend contains 50 wt% of component A) and 50 wt% of component B).

The dry blended composition of example 1 has been extrude in an extruder Leistritz ZSE 27MAXX. The machine parameters were:
- Rotation speed: 700 rpm;
- Throughput: 30 kg/h;
- Temperatures:
   Zone 1: 310°C, Zone 2: 320°C, Zone 3-10: 340°C, Die: 300°C;
- SEI: 0.30 kWh/kg.

Under said conditions a thermal visbreaking occurred. The resulting product has an MIE (190°C 5 kg) of 6.6 g/ 10 min. The MFR value shows that the crosslinked occurred and that the Crosslinked material is now processable.

**Table 1 shows the examples for products, a blend of 60/40 wt% virgin and visbroken polyethylene and another sample which is blended in a ratio of 50 / 50 wt% based on the overall molecular weight of the final composition.**

| | T | v PE | vb PE | Composition vb/v |
|---|---|---|---|---|
| visbreaking conditions | 300°C | | | |
| Sample 1 | | 60 | 40 | 60/40 |
| Sample 2 | | 50 | 50 | 50/50 |
| Pex content % | | | | 30 |
| MFR5 | | 1.9 | 6.6 | 1.9 dg/min |

## Claims

1. A process for obtaining a recycled polyethylene material having a MIE (ISO 1133-1 2012-03 at 190°C and 5 kg) ranging from 1.0 to 15.0 g/10 min, said process comprises the following steps:
T1) dry blending a composition comprising:
A) from 90 to 10 wt% of a recycled crosslinked polyethylene having the MIE (ISO 1133-1 2012-03 at 190°C and 5 kg) not measurable and having no melting point;
B) from 90 to 10 wt% of a high density polyethylene polymer having:
i) MIE (ISO 1133-1 2012-03 at 190°C and 5 kg) ranging from 0.1 to 6.2 g/10 min, preferably ranging from 0.4 g/10 min, to 4.2 g/10 min, more preferably ranging from 0.7 to 3.2 g/10 min;
ii) density (ISO 1183-1:2012 at 23°C) ranging from 0.940 to 0.965 g/cm³ ; preferably ranging from 0.943 to 0.962 g/cm³; more preferably ranging from 0.948 to 0.961 g/cm³;
T2) subjecting the dry blended composition of step T1 to thermal visbreaking at a temperature higher than 290°C in an extruder device.

2. The process according to claim 1, wherein component A) ranges from 30 to 70 wt% and component B) ranges from 30 to 70 wt%.

3. The process according to claim 1 or 2, wherein component B) has MIE (ISO 1133-1 2012-03 at 190°C and 5 kg) ranging from 0.4 g/10 min, to 4.2 g/10 min.

4. The process according to anyone of claim 1-3, wherein component B) has density (ISO 1183-1:2012 at 23°C) ranging from 0.943 to 0.962 g/cm³.

5. The process according to anyone of claim 1-4, wherein component A) the FTIR spectrum of film recorded as described in the example section shows at least two peaks at different wavenumbers (cm-1) selected from
3303 ±1 cm-1; 1642 ±1 cm-1; 1550 ±1 cm-1; 1491±1 cm-1; 1451±1 cm-1; 1726 ±1 cm-1; 1600 ±11 cm-1, 748 ±1 cm-1; 695 ±1 cm-1.

6. The process according to anyone of claim 1-5, wherein component B) can consist of or comprise virgin polyethylene or can consist of or comprise recyclate polyethylene.

7. The process according to anyone of claim 1-5, wherein component B) can also consist of or comprise a blend of virgin polyethylene and recyclate polyethylene.

8. The process according to anyone of claim 1-7, wherein component A) is a recycled polyethylene crosslinked with electron beam (PE-XC).

9. The process according to anyone of claim 1-8 wherein the thermal visbreaking is carried out at a temperature equal to or greater than 300°C and lower than 500°C.

10. The process according to anyone of claim 1-9 wherein the thermal visbreaking is carried out at a temperature equal to or greater than 305°C and lower than 500°C.

11. The process according to anyone of claim 1-10, wherein the thermal visbreaking is carried out in the absence of or substantially in the absence of oxygen.

12. The process according to anyone of claim 1-11, wherein the specific energy input (SEI) mechanically applied to the melt through the rotation of the screws ranges from 0.15 to 0.4 kWh/kg.
